# EUROPÄISCHE PATENTANMELDUNG

(11) **EP 0 785 101 A2**
(43) Veröffentlichungstag der Anmeldung: **23.07.1997**
(21) Anmeldenummer: 96120670.3
(22) Anmeldetag: 20.12.1996
(51) Int. Cl.: B60N 2/44

(54) **Elektrisch kontaktierbare Funktionsmatte, insbesondere Sensormatte oder Heizmatte**

(30) Priorität: 20.01.1996 DE 19601969
(71) Anmelder: MERCEDES-BENZ AG, 70327 Stuttgart (DE); KEIPER RECARO GmbH & Co., D-42855 Remscheid (DE)
(72) Erfinder: Rauscher, Frank, 72141 Walldorf-Häslach (DE); Böhmer, Michael, 67722 Winnweiler (DE); Buck, Peter, 67817 Imsbach (DE)

(57) **Zusammenfassung**

Die Erfindung betrifft eine elektrisch kontaktierbare Funktionsmatte, insbesondere Sensormatte oder Heizmatte zum Einbau in das Sitzpolster eines Fahrzeugsitzes.

Erfindungsgemäß wird vorgeschlagen, daß die Funktionsmatte integraler Bestandteil eines Sitzpolster-Aufbauteils ist, wobei die Funktionsmatte im Zuge der Herstellung des Sitzpolster-Aufbauteils integriert wurde. Insbesondere wird vorgeschlagen, einen Foliendrucksensor zur Sitzbelegungserkennung in ein Sitzkissen-Schaumteil einzuschäumen.

Die Funktionsmatte kann in einem Arbeitsgang mit dem Sitzpolster-Aufbauteil bzw. Sitzkissen-Schaumteil paßgenau in den Fahrzeugsitz eingebaut werden. Damit wird die Sensormatte sehr genau positioniert und fixiert, was insbesondere bei Sensormatten zur Sitzbelegungserkennung mit Kindersitzerkennung wichtig ist.

## Beschreibung

Die Erfindung betrifft eine elektrisch kontaktierbare Funktionsmatte, insbesondere Sensormatte oder Heizmatte, zum Einbau in das Sitzpolster eines Fahrzeugsitzes gemäß dem Oberbegriff des Patentanspruchs 1. Außerdem betrifft die Erfindung ein Verfahren zur Herstellung eines Sitzkissen-Formteils mit integrierter Funktionsmatte.

Eine gattungsgemäße Funktionsmatte wird im Falle einer Heizmatte beispielsweise durch das aus der DE 37 03 939 A1 bekannte flächige Heizelement gebildet. Der flächige Träger der Heizleiter des Heizelementes wird von einem grobmaschigen Gittergeflecht aus Kunststoffdrähten oder Kunststofffäden gebildet. Zur Einbringung in den Fahrzeugsitz wird die Heizmatte unmittelbar in eine Autositz-Negativform auf den ebenfalls eingelegten Sitzbezugstoff eingelegt und der Formhohlraum mit Schaumskunststoff ausgeschäumt. Zur Lagefixierung der Heizmatte während des Aufschäumens dienen punktförmige Klebebeläge, die beim Einlegen in die Form auf den Sitzbezugsstoff wirksam werden. Diese Art der Lagefixierung ist demnach nur bei solchen Herstellungsverfahren anwendbar, bei denen der Sitzbezugstoff mit in die Form eingelegt wird.

Aus der DE 40 29 683 A1 ist ein Sitzbelegungssensor bekannt, welcher durch ein im Bereich der Sitzoberfläche in den Sitzkörper eingeschäumtes, querkraftempfindliches Kabel gebildet wird.

Aus der Schrift ist nicht bekannt, auf welche Weise das Kabel eingeschäumt wird. Ein querkraftempfindliches Kabel stellt auch keine flächig ausgebildete Funktionsmatte dar, auf welche sich die Erfindung bezieht.

Eine flächig ausgebildete Sensormatte wird beispielsweise durch den aus der DE 42 37 072 C2 bekannten Foliendrucksensor zur Sitzbelegungserkennung gebildet. Ein solcher Foliendrucksensor erkennt über Widerstandsänderungen durch Gewichtsbelastung, ob der Beifahrersitz bzw. die Fondsitze eines Kraftfahrzeugs durch einen Insassen belegt oder unbelegt sind. Dazu fragt eine Elektronik den elektrischen Zustand der Sensormatte mehrmals in der Sekunde ab. Die Abfrage der Sitzbelegung dient dazu, die Elektronik so zu schalten, daß ein Airbag nur dann gezündet werden kann, wenn der zugeordnete Sitz auch belegt ist. Eine Zündung bei nichtbelegtem Sitz soll so verhindert werden.

Die Sitzbelegungserkennung kann ergänzt sein durch eine automatische Kindersitzerkennung, die erkennt, ob und in welche Richtung ein Kindersitz auf dem Fahrzeugsitz befestigt ist, um die Auslöseelektronik des Airbags entsprechend anzusteuern. Da es bei der automatischen Kindersitzerkennung auf die genaue Auswertung der lokalen Gewichtsanteil ankommt, ist hier die genaue Positionierung der Sensormatte innerhalb des Fahrzeugsitzes besonders wichtig.

Der bekannte Foliendrucksensor besteht aus einem ungefähr 0,5 mm dicken und steifen Laminat aus Kunststoff-Folien. In der einfachsten Ausführung sind zwei Kunststofflagen zusammenlaminiert, wobei innen die eine Lage mit einem Halbleitermaterial und die andere Lage mit zwei kammartig ineieinandergreifenden Elektroden beschichtet ist. Um zu verhindern, daß die im Sitzkissen einzubauende Sensormatte von einem den Fahrzeugsitz einnehmenden Insassen durchgespürt werden kann, müssen entsprechende Kaschierungsmaßnahmen vorgesehen sein. Dazu sind derzeit aufwendige Polsteraufbauten erforderlich. Hierbei kommen mehrlagige Schaum- und Vlieskaschierungen zum Einsatz, die teilweise verklebt werden müssen, um die Sensormatte in einer vorgeschriebenen Position im Sitzspiegel zu halten. Dies erfordert aufwendige Montage und Materialsteuerungsprozesse.

Aufgabe der Erfindung ist es, eine Funktionsmatte so auszubilden, daß der positionsgenaue Einbau einer Funktionsmatte in das Sitzpolster eines Fahrzeugsitzes, insbesondere in ein Sitzkissen-Formteil vereinfacht wird. Eine weitere Aufgabe der Erfindung ist es, ein geeignetes Verfahren zur Herstellung eines Sitzkissen-Formteils mit integrierter Funktionsmatte anzugeben.

Die erste Aufgabe wird durch die Merkmale des Anspruchs 1 gelöst, wobei die Merkmale der Unteransprüche besondere Aus- und vorteilhafte Weiterbildungen kennzeichnen. Weitere Ansprüchen kennzeichnen ein geeignetes Verfahren zur Herstellung eines Sitzkissen-Formteils mit integrierter Funktionsmatte.

Die erfindungsgemäß bei Herstellung eines Sitzkissen-Formteils positionsgenau integrierte, insbesondere durch Einschäumen integrierte Funktionsmatte kann in einem Arbeitsgang mit dem Sitzkissen-Schaumteil paßgenau in den Fahrzeugsitz eingebaut werden. Damit wird die Funktionsmatte sehr genau positioniert und fixiert, was insbesondere bei Sensormatten zur Sitzbelegungserkennung und Kindersitzerkennung wichtig ist. Auch entfallen gewichtsintensive Klebe- und Positionierschichten, was zur Gewichtsreduktion des Fahrzeugs beiträgt. Ebenso entfallen Kaschierungsmaßnahmen durch mehrlagige Polsteraufbauten, weil die integrierte Funktionsmatte bereits ausreichenden Sitzkomfort herstellt. Insgesamt werden Material und Montagekostekosten gespart. Desweiteren ist bei defekter Funktionsmatte ein Austausch des Polster-Aufbauteils, insbesondere des Sitzkissen-Schaumteils mit der integrierten Funktionsmatte sehr einfach möglich und auch von einem Laien durchführbar.

Weitere Einzelheiten und vorteilhafte Weiterbildungen der Erfindung ergeben sich aus weiteren Unteransprüchen in Verbindung mit der folgenden Beschreibung.

Ein Ausführungsbeispiel der Erfindung sowie ist in der Zeichnung dargestellt und wird nachstehend erläutert. Es zeigen:
- Fig.1:: eine erfindungsgemäß in ein Sitzkissen-Schaumteil eingeschäumte Funktionsmatte (Foliendrucksensor),
- Fig.2:: ein Verfahren zum Einschäumen der Funktionsmatte (Foliendrucksensor) in ein Sitzkissen-Schaumteil,
- Fig.3:: den Einbau einer Funktionsmatte (Foliendrucksensor) in ein Sitzkissen-Schaumteil gemäß dem Stand der Technik.

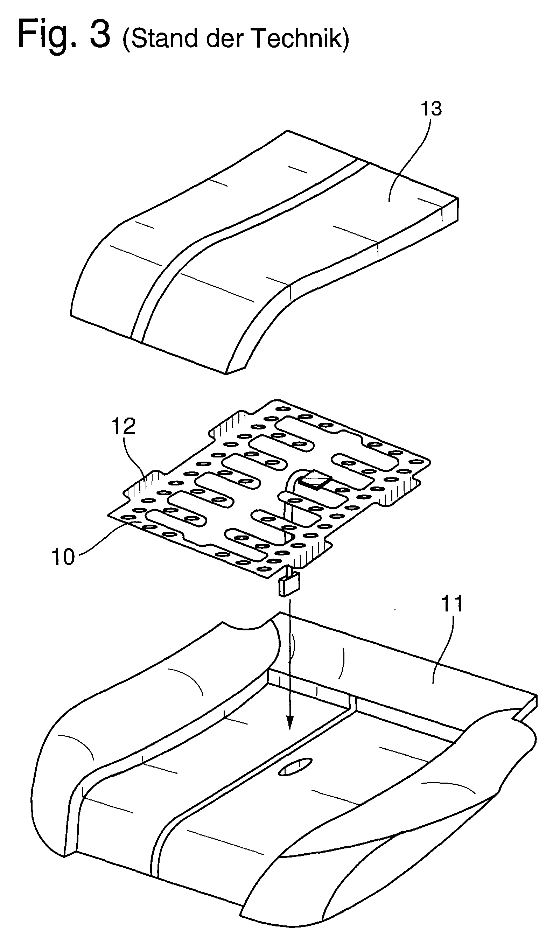

Wie aus Fig. 3 ersichtlich, wird gemäß dem Stand der Technik die Funktionsmatte, in diesem Fall ein Foliendrucksensor zur Sitzbelegungserkennung 10 in ein Sitzkissenunterteil 11 eingelegt, dort mittels Positionsklebern 12 fixiert und mit einer Kaschierung 13 z.B. aus Schnittschaum, Formschaumteilen oder Halbwollmaterial überdeckt. Das Sitzkissenunterteil 11 kann durch ein Schaum-, Gummihaar- oder Thermobondteil gebildet sein.

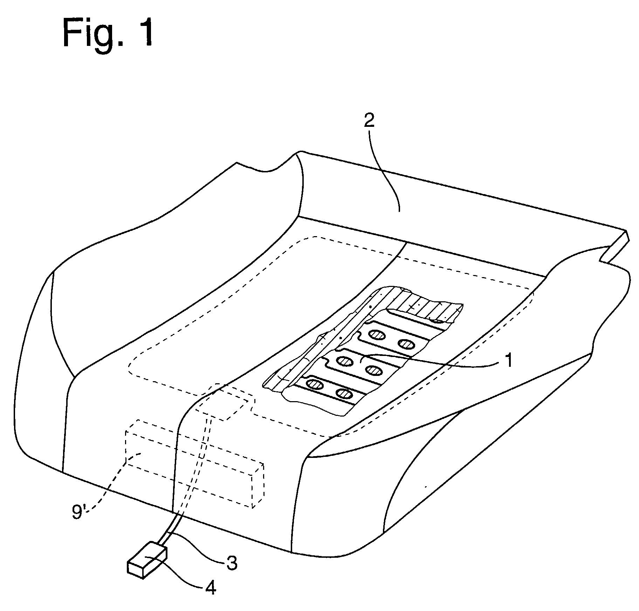

Wie aus Fig. 1 ersichtlich, ist erfindungsgemäß die Funktionsmatte, im Ausführungsbeispiel ist dies ein Foliendrucksensor zur Sitzbelegungserkennung 1 in ein Sitzkissen-Formteil 2 unverrückbar eingeschäumt. Das Anschlußkabel 3 mit dem Anschlußstecker 4 ist an der Unterseite des Sitzkissen-Formteils herausgeführt. Es kann auch eine von der Sitzkissenunterseite her zugängliche Aufnahmetasche 9' vorgesehen sein, in welche zu Transportzwecken das Anschlußkabel 3 mit dem Anschlußstecker 4 verstaut werden können.

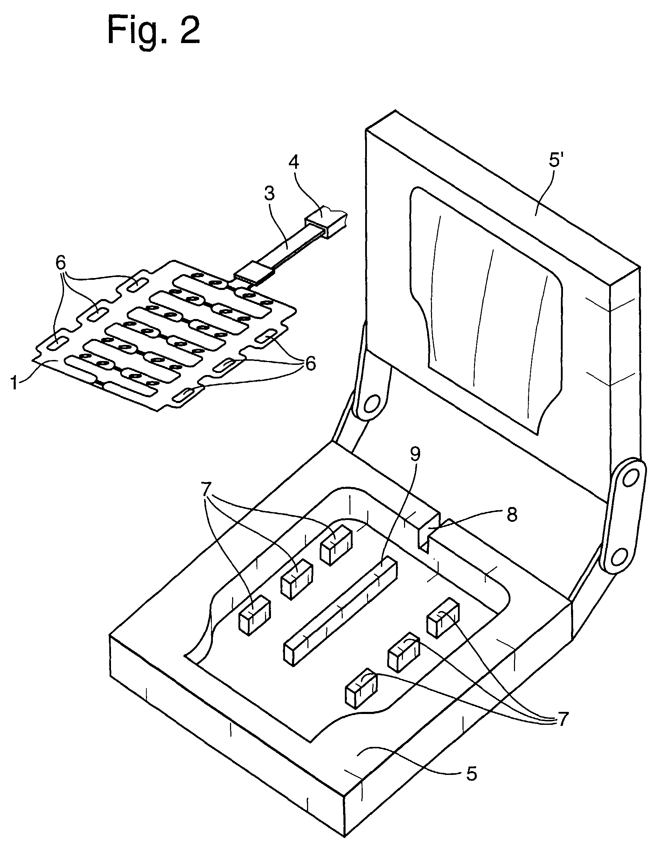

In Fig. 2 ist das Verfahren zur Herstellung einer in ein Sitzpolster-Aufbauteil integrierten Funktionsmatte am Beispiel des Einschäumens eines Foliendrucksensors 1 in ein Sitzkissen-Schaumteil dargestellt. Der Foliendrucksensor 1 wird mit seiner druckempfindlichen Seite nach unten in die untere Schäumform 5 des aus unterer und oberer Schäumform bestehenden Formwerkzeugs 5, 5' eingelegt. Die untere Schäumform 5 bildet die Schaumteiloberseite, d.h. die der späteren Sitzfläche zugewandten Seite ab. Dabei werden die Positionierausnehmungen 6 in der Sensormatte 1 auf die Positionierdome 7 in der unteren Schäumform 5 aufgesteckt, um eine genaue Lagefixierung der Sensormatte 1 zu gewährleisten. Das Anschlußkabel 3 mit dem Anschlußstecker 4 werden in einen Schlitz 8 in der unteren Schäumform 5 und an der Trennebene zur oberen Schäumform 5' eingelegt und so nach außen geführt. Das Anschlußkabel 3 kann auch durch die obere, einen Formdeckel bildende Schäumform 5', welche später die Schaumteilunterseite abbildet, geführt sein, was das Schließen des Formdeckels 5' jedoch erschwert.

Desweiteren ist in die untere Schäumform 5 ein Schwert 9 eingelegt, welches eine mittig verlaufende Aufnahmetasche erzeugt, die von der Unterseite des Sitzkissen-Formteils 2 her zugänglich ist. Alternativ ist in Fig. 1 eine quer verlaufende Aufnahmetasche 9' angedeutet, wie sie durch ein an entsprechender Stelle quer gestelltes Schwert erzeugt würde. In der Aufnahmetasche können das Anschlußkabel 3 und der Anschlußstecker 4 geschützt verwahrt werden.

Nach Einbringen des Schäumungsmittels z.B. durch Robotormischköpfe, wird der Formdeckel 5' geschlossen und die vorgeschriebene Verweilzeit abgewartet. Nach Verstreichen der Verweilzeit wird der Formdeckel 5' geöffnet und das Formteil 2 mit der eingeschämten Sensormatte 1 der Schäumform 5 entnommen. Die durch Einbringen des Schwertes 9 erzeugte Aufnahmetasche ermöglicht eine geschützte Aufbewahrung des Anschlußkabels 3 und des Anschlußteckers 4 während des Walkens (mechanisches Crashen) des Schaumteils 2. Dieses Walken ist ein Teilschritt in der Herstellung des Schaumteils 2 und dient dazu, vorhande Blasen im Schaum aufzubrechen, um die elastischen Eigenschaften des Schaumteils 2 herzustellen. Durch die Aufbewahrung des Anschlußkabels 3 und Anschlußsteckers 4 in der Aufnahmetasche wird eine Beschädigung des Anschlußsteckers 4 oder der Oberfläche des Schaumteils 2 verhindert. Diese Aufbewahrung ist auch vorteilhaft beim Versand der eingeschäumten Sensormatte und verhindert Transportschäden.

Das beschriebene Herstellungsverfahren ist ohne weiteres auch auf andere Verfahren zu Herstellung eines Sitzkissens oder Polsteraufbauteils mittels eines Formwerkzeugs übertragbar, z.B. kann in dieser Weise eine Sensormatte oder Heizmatte auch in ein Gummihaar- oder Thermobond-Polsteraufbauteil bei dessen Herstellung eingebacken werden.

Der allgemeine Erfindungsgedanke besteht darin, daß die Funktionsmatte in ein Polsteraufbauteil beliebiger Machart, das jedoch nach einem bestimmten Verfahren hergestellt wird, integriert ist, wobei es nicht nachträglich eingesetzt sondern im Zuge des Herstellungsverfahrens des Polsteraufbauteils integriert wird. Neben dem Einschäumen oder Einbacken sind auch andere Einbettungen denkbar, beispielsweise eine Einbettung in ein Filzmaterial oder ein gewebtes Material.

In vorteilhafter Weise ist das Polsteraufbauteil mit der integrierten Funktionsmatte so gestaltet, daß es sich paßgenau in den Fahrzeugsitz einbauen läßt und sich mit seinem Einbau eine genaue Positionierung der Funktionsmatte ergibt. Das kann dadurch erfolgen, daß bei seiner Herstellung das Polsteraufbauteil in seinen Außenabmessungen bereits auf den Fahrzeugsitz zugeschnitten wird, in den es eingebaut wird.

Die am Beispiel einer Sensormatte in Gestalt eines Foliendrucksensors ausgeführte Erfindung ist ohne weiteres auch auf andere Arten von Sensormatten oder auf Heizmatten anwendbar.

## Patentansprüche

1. Elektrisch kontaktierbare Funktionsmatte, insbesondere Sensormatte oder Heizmatte, zum Einbau in das Sitzpolster eines Fahrzeugsitzes, wobei die Funktionsmatte flächig ausgebildet ist und integraler Bestandteil eines die Funktionsmatte rundum umschließenden Sitzkissen-Formteils ist,
**dadurch gekennzeichnet,**
daß die Funktionsmatte (1) Positionierausnehmungen (6) aufweist, welche für das zum Zusammenwirken mit Positionierdomen (7) innerhalb eines Formwerkzeugs (5, 5') zur Herstellung des Sitzkissen-Formteils (2) ausgebildet sind.

2. Elektrisch kontaktierbare Funktionsmatte nach Anspruch 1,
**dadurch gekennzeichnet,**
daß das Sitzkissen-Formteil (2) paßgenau in den Fahrzeugsitz einbaubar ist.

3. Elektrisch kontaktierbare Funktionsmatte nach Anspruch 2,
**dadurch gekennzeichnet,**
daß das Sitzkissen-Formteil (2) ein Sitzkissen-Schaumteil ist.

4. Elektrisch kontaktierbare Funktionsmatte nach Anspruch 3,
**dadurch gekennzeichnet,**
daß das Sitzkissen-Schaumteil (2) eine Aufnahmetasche (9') aufweist, in welche ein Anschlußkabel (3) und ein Anschlußstecker (4) der Funktionsmatte (1) eingesteckt und geschützt verstaut werden können.

5. Elektrisch kontaktierbare Funktionsmatte nach Anspruch 1,
**dadurch gekennzeichnet,**
daß die Funktionsmatte eine Sensormatte ist, die als Foliendrucksensor (1) zur Sitzbelegungserkennung ausgebildet ist.

6. Elektrisch kontaktierbare Funktionsmatte nach Anspruch 1,
**dadurch gekennzeichnet,**
daß die Funktionsmatte eine Heizmatte ist, die zur Beheizung des Sitzfläche des Fahrzeugsitzes ausgelegt ist.

7. Verfahren zur Herstellung eines Sitzkissen-Formteils mit einer integrierten Funktionsmatte nach einem der Ansprüche 1-6,
**dadurch gekennzeichnet,**
daß die Funktionsmatte (1) in ein dem Sitzkissen-Formteil (2) die Form gebendes Formwerkzeug (5) eingelegt wird, wobei Positionierausnehmungen (6) in der Sensormatte (1) auf Positionierdome (7) innerhalb des Formwerkzeugs (5, 5') aufgesteckt werden, bevor das Formwerkzeug (5, 5') mit dem Material zur Herstellung des Formteils, insbesondere ein Schäumungsmittel gefüllt wird.

8. Verfahren zur Herstellung eines Sitzkissen-Formteils mit einer integrierten Funktionsmatte nach Anspruch 7,
**dadurch gekennzeichnet,**
daß ein Anschlußkabel (3) der Funktionsmatte (1) in einen Schlitz (8) von einer der Schäumformen (5, 5') des Formwerkzeugs eingelegt und so nach außen geführt wird.

9. Verfahren zur Herstellung eines Sitzkissen-Formteils mit einer integrierten Funktionsmatte nach Anspruch 8,
**dadurch gekennzeichnet,**
daß zur Erzeugung einer Aufnahmetasche (9') in dem Sitzkissen-Formteil (2) ein Schwert (9) in die eine Schäumform (5) eingelegt wird.

10. Verfahren zur Herstellung eines Sitzkissen-Formteils mit einer integrierten Funktionsmatte nach Anspruch 9,
**dadurch gekennzeichnet,**
daß das Sitzkissen-Formteil ein durch Aufschäumen hergestelltes Sitzkissen-Schaumteil (2) ist und während des Herstellungsschrittes des Walkens das Anschlußkabel (3) der Funktionsmatte (1) und ein gegebenenfalls daran befestigter Anschlußstecker (4) in der Aufnahmetasche (9') geschützt verwahrt werden.
